Europäisches Patentamt

European Patent Office

Office européen des brevets

(11) Veröffentlichungsnummer: **0 160 922**
**B1**

(12) **EUROPÄISCHE PATENTSCHRIFT**

(45) Veröffentlichungstag der Patentschrift: **04.07.90**

(51) Int. Cl.⁵: **G 01 N 29/04**

(21) Anmeldenummer: **85105268.8**

(22) Anmeldetag: **30.04.85**

(54) **Verfahren zur zerstörungsfreien Prüfung von Werkstücken oder Bauteilen mit Ultraschall und Vorrichtung zur Durchführung des Verfahrens.**

(30) Priorität: **05.05.84 DE 3416709**

(43) Veröffentlichungstag der Anmeldung:
**13.11.85 Patentblatt 85/46**

(45) Bekanntmachung des Hinweises auf die
Patenterteilung:
**04.07.90 Patentblatt 90/27**

(84) Benannte Vertragsstaaten:
**DE FR GB**

(56) Entgegenhaltungen:
EP-A-0 102 176
EP-A-0 139 235
DE-A-1 900 913
FR-A-2 340 549
GB-A-2 114 300
US-A-3 453 871

PATENT ABSTRACTS OF JAPAN, Band 7, Nr. 93
(P-192)1238r, 19. April 1983; & JP-A-58 21 162
(NIPPON KOKAN K.K.) 07-02-1983

(73) Patentinhaber: **Nukem GmbH**
**Rodenbacher Chaussee 6 Postfach 11 00 80**
**D-6450 Hanau 11 (DE)**

(72) Erfinder: **Maurer, Albrecht, Dr. Dipl-Phys.**
**Hans-Memling-Strasse 5**
**D-6453 Seligenstadt (DE)**

(74) Vertreter: **Stoffregen, Hans-Herbert, Dr. Dipl.-**
**Phys.**
**Salzstrasse 11a**
**D-6450 Hanau/Main 1 (DE)**

Courier Press, Leamington Spa, England.

## Beschreibung

Die Erfindung bezieht sich auf ein Verfahren zur zerstörungsfreien Prüfung von Werkstücken und Bauteilen mit Ultraschall, wobei die Werkstücke oder Bauteile jeweils an gleichen Stellen nacheinander nach dem Durchschallungsprinzip mit Ultraschallwellen beaufschlagt werden, die sich unter sonst gleichen Bedingungen durch ihre einander entgegengesetzten Richtungen unterscheiden, und auf eine Vorrichtung zur Durchführung des Verfahrens.

Ein Verfahren der vorstehend beschriebenen Art ist bereits bekannt (FR—A—23 40 549). Um die Prüfergebnisse bezüglich der Bewertung zu verbessern, die Prüfempfindlichkeit des Durchschallungsverfahrens zu erhöhen und die Prüfbereiche zu optimieren, wird bei dem bekannten Verfahren das Durchschallungsverfahren mit dem Impulsechoverfahren kombiniert. Der betriebliche Laufzeitfaktor des Durchschallungsverfahrens wird hierbei auf das Impulsechoverfahren übertragen. Da Sender-Empfänger-Prüfköpfe auf einander gegenüberliegenden Seiten des jeweiligen Prüflings in gleichem Abstand zur Oberfläche und auf gleichartige Weise an diese angekoppelt sind, kann die durch eine "tote Zone" im prüfkopfnahen Bereich verursachte Schwierigkeit beseitigt werden. Es werden nämlich für die Fehlerbewertung nur die prüfkopffernen Zonen zur Prüfung des oberflächennahen Bereichs herangezogen. Im Hinblick auf die Prüfkopfcharakteristik ist damit die Prüfempfindlichkeit über den gesamten Prüfquerschnitt gleichbleibender. Die Prüflinge können bis unmittelbar an die Oberflächen geprüft werden. Die empfangenen Signale werden einem gemeinsamen Hauptverstärker zugeführt.

Bekannt ist auch eine Einrichtung zur automatischen Ultraschallkontrolle des Anhaltens kreisförmiger Materialschichten an Brennstoffstäben. Die Einrichtung enthält symmetrisch im bezug auf den jeweils zu prüfenden Stab angeordnete Sendeköpfe, die mit Empfängerköpfen zusammenwirken. Ein Mehrphasen-Multivibrator weist eine der Anzahl der Sendeköpfe entsprechende Anzahl von Ausgängen auf, an denen zeitlich versetzt die Ansteuersignale für die Sender erzeugt werden, an die die Sendeköpfe angeschlossen sind. Die Empfängerköpfe werden über einen elektronischen Umschalter zeitmultiplex an einen Verstärker gelegt, dem ein Auswertkreis nachgeschaltet ist (DE—A—19 00 913).

Bekannt ist ferner eine Methode zur Tiefenlagenbestimmung von ultraschallreflektierenden Flächen in einem Körper mit Hilfe des Impulsecho- und des Durchschallungsverfahrens. Das Impulsechoverfahren in zwei zueinander entgegengesetzten Richtungen und das Durchschallungsverfahren werden nacheinander an der gleichen Stelle des zu prüfenden Körpers ausgeübt. Die Tiefanlage der ultraschallreflektierenden Flächen wird mit Hilfe des Impulsechoverfahrens festgestellt. Das Durchschallungsverfahren dient lediglich zur Ankopplung der Prüfköpfe (DE—B—16 48 341).

Schließlich ist ein Verfahren zur Feststellung von Fehlern in Werkstoffen mittels Abtastung des von den Fehlern abgeschatteten Bereichs von Ultraschallfeldern bekannt (DE—C—569 598).

Mit dem Ultraschall-Impulsechoverfahren sind sowohl die Größen als auch die Tiefenlagen von Fehlern in Prüflingen feststellbar. Eine Fehlerbewertung ist nach der Amplitudenvergleich- oder Testkörpermethode möglich. Beim Impulsechoverfahren muß der zu prüfende Gegenstand im Gegensatz zur Durchschallungsmethode nur von einer Seite her zugänglich sein. Die Impulsechomethode ist jedoch nicht anwendbar, wenn oberflächennahe Fehler detektiert werden sollen, weil diese Fehleranzeigen im Oberflächen- bzw. Rückwandecho untergehen, oder wenn sehr hohe Absorption oder Streuung die Detektion des zweimal durch den zu prüfenden Gegenstand gelaufenen Ultraschallechos unmöglich macht. In diesen Fällen wird die Durchschallungsmethode verwendet, wobei die Schalldruckamplitude der vom Senderprüfkopf im Material erzeugten Ultraschallwelle vom Empfängerprüfkopf auf der gegenüberliegenden Seite des Werkstücks gemessen wird. Befindet sich ein Fehler im Material, wird die vom Sender erzeugte Schallwelle vom Fehler abgeschattet und der empfangene Prüfkopf empfängt die Signale in abgeschwächter Form.

Somit kann aus der Schwächung des im Empfängerprüfkopf detektierten Ultraschallsignals auf einen Fehler im Material geschlossen werden. Da jedoch kein Laufzeitsignal vorliegt, das dem Fehlersignal zugeordnet werden kann, ist eine Aussage über die Tiefenlage des Fehlers und damit eine Fehlerbewertung nicht möglich.

Der Erfindung liegt die Aufgabe zugrunde, einerseits ein Verfahren der eingangs beschriebenen Gattung derart weiterzuentwickeln, daß auf einfache Weise eine Tiefenbewertung von Fehlern möglich ist, und andererseits eine Vorrichtung zur Durchführung des Verfahrens zur Verfügung zu stellen.

Die Aufgabe wird für das Verfahren erfindungsgemäß dadurch gelöst, daß die bei den unterschiedlichen Schallrichtungen empfangenen Ultraschallsignale, sofern sie verschiedene Signalamplituden aufweisen, zur Bestimmung der Fehlertiefe im Werkstück oder Bauteil mit vorgegebenen Werten verglichen werden, die von einem gleichen Werkstück oder Bauteil mit Fehlern vorab bekannter Tiefe gewonnen sind, während bei einer in etwa völligen Schallabsorption die Beaufschlagung mit Ultraschallwellen in einander entgegengesetzten Richtungen an benachbarten Stellen fortgesetzt wird, bis Ultraschallsignale empfangen werden, deren Unterschiede zur Feststellung der Tiefenlage des jeweiligen Fehlers ausgewertet werden. Die Fehlertiefe wird bei dem vorstehend beschriebenen Verfahren durch einen Vergleich bestimmt. Für den Vergleich stehen Werte zur Verfügung, die von einem Probekörper durch Messung erhalten wurden. Dieser Probekörper, der verschiedene, in unterschiedlicher Tiefe liegende Fehler aufweist, deren Tiefe vorgegeben und damit bekannt ist, hat die gleichen Abmessungen wie die Prüfkörper. Daher sind die für den Vergleich bestimmten und vom Probekörper durch Messung gewonnenen Signale Fehlern mit festgelegten Tiefen zugeordnet. Die bei der Prüfung von Werkstücken gemessenen Signale werden mit den Werten verglichen, die den unterschiedlich tiefen Fehlern zugeordnet sind. Bei einer Übereinstimmung zwischen den gemessenen Signalen und den vom Probekörper erhaltenen Vergleichswerten ist im jeweiligen Prüfkörper ein Fehler vorhanden, der dem hinsichtlich der Tiefe bekannten Fehler im Probekörper entspricht. Die mit dem Probekörper an Hand von Fehlern mit bekannter Tiefenlage erhaltenen Werte bilden eine Kalibrierkurve, die eine eindeutige Beziehung zwischen den Verhältnissen der Schalldruckamplituden in unterschiedlichen Prüfrichtungen und der Tiefenlage des entsprechenden Fehlers herstellt. Mit dem oben beschriebenen Verfahren lassen sich Fehler auch dann feststellen, wenn die Abmessungen der Fehler größer als die Durchmesser der Sender-, Empfängeprüfköpfe sind. Bei Fehlern, deren Abmessungen kleiner als der Durchmesser des Senderprüfkopfes bzw. des Ultraschallbündels ist, wird mit dem Verfahren eine physikalische Eigenschaft von Schallfeldern ausgenutzt, die darin besteht, daß nach der Abschattung durch ein Hindernis, wie es ein Materialfehler darstellt, in einer gewissen Entfernung vom Hindernis wieder ein homogenes Schallfeld vorhanden ist.

Das bedeutet, daß die gemessene Schalldruckamplitude unter einem Hindernis bei gleicher Hindernisgröße vom Abstand Hindernis—Empfängerprüfkopf abhängt und sich mit steigendem Abstand wieder der Schalldruckamplitude im ungestörten Fall nähert. Prüfkopfparameter, die auch einen Einfluß auf das Meßergebnis haben, sind bei der Messung konstant zu halten.

Während mittig im Prüfstück gelegene Fehler in beiden Prüfrichtungen zu gleichen Schalldruckamplituden im Empfänger führen, erzeugen außerhalb der Werkstückmitte liegende Fehler in beiden Prüfrichtungen unterschiedliche Schalldruckamplituden. Mit Hilfe eines geeigneten Probekörpers werden Fehler in verschiedenen Tiefenlagen nach diesem Verfahren analysiert und es wird die Kalibrierkurve aufgestellt, die eine eindeutige Beziehung zwischen den Verhältnissen der Schalldruckamplituden in unterschiedlichen Prüfrichtungen und der Tiefenlage des Fehlers herstellt. Diese Kalibrierkurve wird bei der Prüfung von Werkstücken oder Bauteilen ausgenutzt, um die Tiefe von Fehlern durch Vergleich der Differenz der in unterschiedlichen Durchschallungsrichtungen gemessenen Schalldruckamplituden mit den in der Kalibrierkurve vorgegebenen Schalldruckamplituden zu bestimmen.

Übersteigt die Größe des jeweiligen Fehlers den Durchmesser des Senderprüfkopfs bzw. des für die Messung verwendeten Ultraschallwellenbündels, dann tritt eine Ultraschallabsorption ein, die in beiden Senderichtungen vorhanden ist. Dieser, Fall ist anhand der Ausgangssignale der Empfänger feststellbar. Um die Fehlertiefe zu messen, wird in einem solchen Fall die Meßstelle auf dem Werkstück oder Bauteil ein Stück verlegt, bis das Ultraschallwellenbündel nicht mehr vollständig auf die Fehlerstelle auftrifft. Es kommen dann noch Ultraschallwellen am Empfänger an, die von der Lage des Fehlerrandes und von der Fehlertiefe abhängen. Die Lage des Fehlerrandes ändert sich bei den unterschiedlichen Richtungen der Ultraschallwellen nicht. Die Unterschiede der Schalldruckamplituden, die sich bei den unterschiedlichen Richtungen der Ultraschallwellen ergeben, können deshalb zur Tiefenfeststellung des Fehlers ausgenutzt werden. Erfaßt wird bei Fehlern, die größer als die Schallfeldbreite sind, die Teife der Ränder, an denen Ultraschallwellen noch gebeugt bzw. ungebeugt vorbeilaufen. Aus der Differenz der Schalldruckamplituden ist die Tiefenlage des jeweiligen Randes feststellbar. Der Bereich der Abschattung des Ultraschallfeldes liefert die Ausdehnung des Fehlers senkrecht zur Durchschallungsrichtung.

Ein besonderer Vorteil des oben beschriebenen Verfahrens besteht noch darin, daß aus den durch Messungen in zwei verschiedenen Prüfrichtungen erhaltenen Werten ein Mittelwert gebildet werden kann, auf den laufwegabhängige Intensitätsänderungen keinen Einfluß haben. Es lassen sich ferner in vorteilhafter Weise festigkeitsrelevante Fehler in der Werkstückhaut von Fehlern in der Werkstückmitte unterscheiden, die keinen Einfluß auf das Festigkeitsverhalten des gesamten Werkstücks haben. Durch Angabe der Fehlertiefenlage ist deshalb eine Nacharbeit fehlerhafter Stellen möglich.

Vorzugsweise wird aus der Differenz der in den zueinander entgegengesetzten Richtungen gemessenen Schalldruckamplituden die Tiefenlage des jeweiligen Fehlers und aus den Absolutwerten der Schalldruckamplituden die Fehlergröße bestimmt. Die Differenz der Schalldruckamplituden bzw. der diesen entsprechenden Signalamplituden der Ultraschallempfänger ist ein Maß für die Tiefenlage des jeweiligen Fehlers. Die absolute Höhe der Schalldruckamplituden ist ein Maß für die Fehlergröße. Je größer der Fehler, desto kleiner sind die in den zueinander entgegengesetzten Richtungen auftretenden Schalldruckamplituden. Beispielsweise ergeben sich bei großen oberflächennahen Fehlern zwei relativ kleine Signalamplituden bei einer großen Differenz der Schalldruckamplituden. Bei kleinen oberflächennahen Fehlern ergeben sich zwei große Schalldruckamplituden bei einer großen Schalldruckamplitudendifferenz. Bei Fehlern, die kleiner als die Schallfeldbreite sind, ist die Schalldruckamplitudendifferenz ein Maß für die mittlere Tiefenlage des jeweiligen Fehlers.

Besonders günstig ist es, das Verhältnis der in den beiden zueinander entgegengesetzten Richtungen gemessenen Schalldruckamplituden zu bilden und hieraus die Tiefenlage des jeweiligen Fehlers zu bestimmen. Durch die Quotientenbildung entfallen laufzeitabhängige Einflüsse auf die Meßwerte. Es werden daher gleich große Fehler in Abhängigkeit von der Tiefe gleich bewertet. Wenn kein Fehler im Prüfkörper vorhanden ist, ergibt sich als Quotient der Wert 1. Die Quotienten werden mit einer Kalibrierungskurve verglichen, die Quotienten der mit dem Probekörper gewonnenen Werte beinhaltet. Die Beziehungen zwischen der Nahfeldlänge des Ultraschallstrahls, der Ultraschallwellenlänge, der Objekt-Durchschallungslänge und der Fehlergröße sind in den mit dem Probekörper gewonnenen Kalibrierungskurven enthalten.

Bei einer Vorrichtung zur zerstörungsfreien Prüfung von Werkstücken und Bauteilen mit Ultraschall, mit der die Werkstücke oder Bauteile an jeweils gleichen Stellen nacheinander nach dem Durchschallungsprinzip mit Ultraschallwellen beaufschlagt werden, die sich unter sonst gleichen Bedingungen durch ihre einander entgegengesetzten Richtungen unterscheiden und die mit auf einander gegenüberliegenden Seiten des jeweiligen Werkstücks oder Bauteils in gleichem Abstand zur Oberfläche und auf gleichartige Weise an die Oberfläche angekoppelten Prüfköpfen gesendet bzw. empfangen werden, wobei ein gemeinsamer Hauptverstärker für die empfangenen Signale vorgesehen ist, wird die Aufgabe erfindungsgemäß dadurch gelöst, daß zwei je auf einer Seite des Werkstücks oder Bauteils angeordnete Sender-, Empfänger-Ultraschallprüfköpfe je mit einem Sender und einem Vorverstärker verbunden sind, daß der Sender des einen und der Vorverstärker des anderen Sender-, Empfänger-Ultraschallprüfkopfs im Wechsel mit dem Vorverstärker des einen und dem Sender des anderen Sender-, Empfänger-Ultraschallprüfkopfs mit einem Multiplexer aktiviert werden, oder daß zwei Sender-Empfängerpaare in verschiedenen Sender- und Empfängerprüfköpfen zur Erzeugung von Ultraschallwellen mit zueinander entgegengesetzen Richtungen beiderseits des Werkstücks oder Bauteils angeordnet sind, daß die Senderprüfköpfe jeweils mit einem Sender und die Empfängerprüfköpfe je mit einem Vorverstärker verbunden sind, daß der jeweils zu einem Sender-Empfängerpaare gehörige Sender und der Vorverstärker in zeitlichem Wechsel mit dem zum anderen Sender-Empfängerpaar gehörigen Sender und dem Vorverstärker mit dem Multiplexer aktivierbar sind, der von einem zentralen Steuergerät aktivierbar ist, das den mit den Vorverstärkern verbundenen Hauptverstärker und einen Speicher aufweist, in dem vorab Werte gespeichert sind, die von einem Werkstück oder Bauteil von gleicher Form und Abmessungen mit Fehlern vorgegebener Fehlertiefe erhalten sind, daß das Steuerwerk die jeweils an gleichen Stellen des Werkstücks oder Bauteils bei unterschiedlichen Schallrichtungen empfangenen Ultraschallsignale, sofern sie verschiedene Signalamplituden aufweisen, mit den gespeicherten Vergleichswerten zur Fehlertiefenbestimmung vergleicht, und daß bei einer in etwa völligen Schallabsorption des Werkstück oder Bauteil nach Messung der Ultraschallsignale weiterbewegt wird, bis die empfangenen Ultraschallsignale die für die Tiefenlagebestimmung ausreichend hohen Signalamplituden aufweisen.

Weitere Einzelheiten, Vorteile und Merkmale der Erfindung ergeben sich nicht nur aus den Ansprüchen, sondern auch aus der nachfolgenden Beschreibung der Zeichnung.

Es zeigen:

Fig. 1 ein Blockschaltbild einer ersten Anordnung zur Prüfung von Werkstücken mit Ultraschall nach dem Durchschallungsprinzip,

Fig. 2 ein Blockschaltbild einer zweiten Anordnung zur Prüfung von Werkstücken mit Ultraschall nach dem Durchschallungsprinzip,

Fig. 3 eine schematische Darstellung von Schalldruckamplituden in Abhängigkeit von in einem Werkstück vorhandenen Fehlern und

Fig. 4 eine schematische Darstellung von Schalldruckamplituden in Abhängigkeit von der Größe und Tiefe der in einem Werkstück vorhandenen Fehler.

Zwei Ultraschallprüfköpfe 10, 12 sind auf zwei einander gegenüberliegenden Seiten eines Werkstücks 14 angeordnet, bei dem es sich zum Beispiel um ein Blech handeln kann. Die beiden Ultraschallprüfköpfe 10, 12 sind identisch aufgebaut. Ferner sind die Ultraschallprüfköpfe 10, 12 jeweils im gleichen Abstand von der Oberfläche des Werkstücks 14 angeordnet und auf die gleiche Weise an die zugehörige Oberfläche zum Beispiel direkt oder über eine Wasservorlaufstrecke angekoppelt. Der Ultraschallprüfköpf 10 ist mit einem Sender 16 für hochfrequente elektrische Signale und mit einem Vorverstärker 18 verbunden. In entsprechender Weise ist der Ultraschallprüfkopf 12 mit einem Sender 20 für hochfrequente elektrische Signale und mit einem Vorverstärker 22 verbunden. Die Frequenz der hochfrequenten elektrischen Signale liegt im Ultraschallbereich. Beide Ultraschallprüfköpfe 10, 12 können sowohl als Ultraschallsender als auch als Ultraschallempfänger betrieben werden.

Die Ausgange der Vorverstärker 18, 22 sind mit dem Eingang eines Hauptverstärkers 24 verbunden, der sich in einem zentralen Steuergerät 26 befindet. Das Steuergerät 26 enthält auch einen Multiplexer 28, der über Leitungen 30, 32 jeweils mit den Sendern 16, 20 und über Leitungen 34, 36 jeweils mit den Vorverstärkern 18, 22 verbunden ist.

Der Multiplexer 28 gibt in aufeinanderfolgenden, gleich langen Zeitabschnitten jeweils auf der Leitung 30 ein erstes Steuersignal zur Aktivierung des Senders 16 und auf der Leitung 32 ein zweites Steuersignal zur Aktivierung des Senders 20. Diese Signale werden auch als "Trigger" bezeichnet. Während des Steuersignals auf der Leitung 30 aktiviert der Multiplexer 28 über de Leitung 36 den Vorverstärker 22. Wenn auf der Leitung 32 ein Steuersignal ansteht, aktiviert der Multiplexer 28 über die Leitung 34 den Vorverstärker 18. Es werden also abwechselnd die Ultraschallprüfköpfe 10, 12 als Sender und Empfänger betrieben und mit den Sendern 16, 20 bzw. den Vorverstärkern 18, 22 verbunden. Die Steuersignale zur Aktivierung der Vorverstärker 18, 22 werden auch als "Gates" bezeichnet.

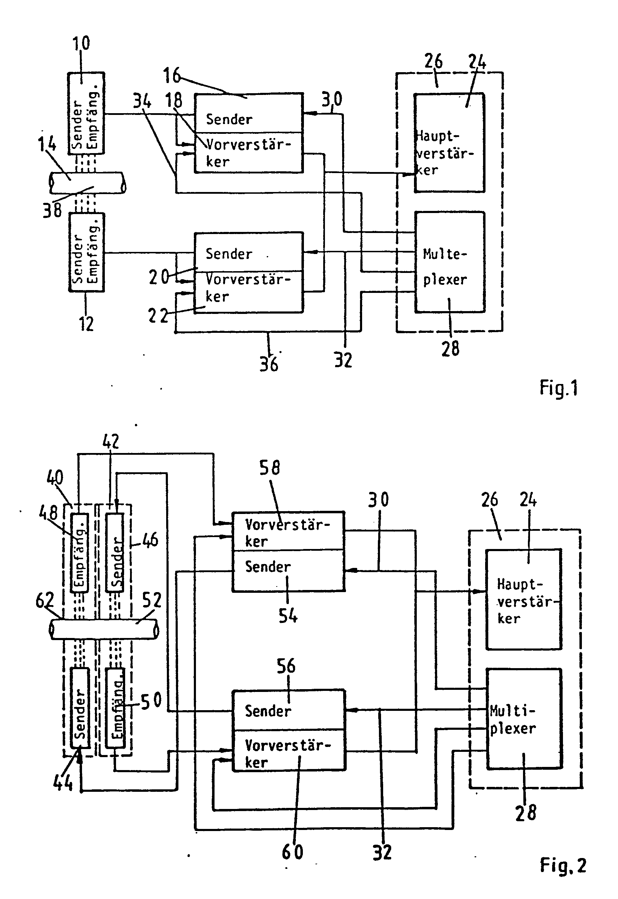

Während zweier aufeinanderfolgender Prüfzyklen verbleibt das Werkstück 14 an der gleichen Stelle, d.h. im Werkstück 14 wird die gleiche Stelle 38, die in Fig. 1 strichpunktiert dargestellt ist, mit Ultraschallwellen geprüft, die zueinander entgegengesetzte Richtungen aufweisen. Die während zweier aufeinanderfolgender Prüfvorgänge an der gleichen Stelle 38 gemessenen Schalldruckamplituden werden über den Hauptverstärker 24 einer nicht näher dargestellten Auswerteeinheit zugeführt, in der sie mit vorab gespeicherten Werten verglichen werden, die vorzugsweise in Form einer Kalibrierkurve bzw. Kalibriertabelle gespeichert sind. Die Kalibrierkurve oder Kalibriertabelle gibt für ein Werkstück, das in der Form und den Abmessungen mit dem jeweiligen Prüling übereinstimmt, die Größen von Schalldruckamplituden in Abhängigkeit von der Tiefe von Fehlern im Inneren des Werkstücks an. Die Kurve wird mit Hilfe einer Testkörpermethode gewonnen.

Diese Methode beruht darauf, daß mit der in Fig. 1 dargestellten Vorrichtung ein oder mehrere Werkstücke gemessen werden, in denen sich Fehler in bekannten Tiefen befinden. Die zu diesen Tiefen festgestellten Schalldruckamplituden werden gemessen. Die Meßwerte ergeben in Abhängigkeit von den bekannten Fehlertiefen die oben beschriebene Kurve bzw. Tabelle. Die Auswertung der bei Werkstücken 14 erhaltenen Meßwerte geschieht durch Vergleich mit dieser Kurve in der Steuereinheit 26. Die Kurve dient zur Tiefenbestimmung von Fehlern, deren Abmessungen kleiner als der Durchmesser der Ultraschallprüfköpfe 10, 12 bzw. kleiner als der Durchmesser des Ultraschallwellenbündels im Werstück 14 ist. Sind die Abmessungen der Fehler größer als die vorstehend erwähnten Durchmesser, dann findet eine Schallabsorption statt. Dies läßt sich anhand der Ausgangssignale der als Empfänger arbeitenden Ultraschallprüfköpfe 10, 12 feststellen. In diesem Fall wird die Messung in einer anderen Stelle durchgeführt, die zu der Stelle benachbart ist, an der die Schallabsorption eintritt. Nach Feststellung der Schallabsorption werden das Werkstück oder die Ultraschallprüfköpfe 10, 12 ein Stück weiterbewegt, wobei die oben beschriebenen Messungen wiederholt werden. Die Messungen werden an jeweils aneinandergrenzenden neuen Stellen so lange fortgesetzt, bis keine Schallabsorption mehr auftritt. Der Unterschied der Schalldruckamplituden der empfangenen Ultraschallwellen, die in einander entgegengesetzten Richtungen den Rand der jeweiligen Fehlerstelle passieren, wird dann zur Bestimmung der Tiefe der Fehlerstelle ausgenutzt. Da immer die Schalldruckamplituden in zwei einander entgegengesetzten Richtungen der Ultraschallwellen ausgewertet werden, ergeben sich für Fehler, die kleiner als die Schallfeldbreite sind, charakteristische Werte, die mit Fehlern vorab bestimmter Breite im Probekörper bestimmt werden. Die Differenz der aus den beiden zueinander entgegengesetzten Schallrichtungen gewonnenen Schalldruckamplituden ist ein Maß für die Tiefenlage des jeweiligen Fehlers. Demgegenüber ist die absolute Höhe der jeweiligen Schalldruckamplituden ein Maß für die Fehlergröße. Bei Fehlern, die kleiner als die Schallfeldbreite sind, ergibt die Differenz der Schalldruckamplituden die mittlere Tiefenlage des Fehlers. Aus den Schalldruckamplituden selbst kann vorzugsweise die Größe des jeweiligen Fehlers bestimmt werden.

Bei Fehlern, die größer als die Schallfeldbreite sind, wird die Tiefenlage der Ränder festgestellt, an denen Ultraschallwellen noch gebeugt werden bzw. ungebeugt vorbeilaufen. Aus der Differenz der Schalldruckamplituden ist deshalb die Tiefenlage des jeweiligen Randabschnitts feststellbar. Die Größe der die Schallfeldbreite überschreitenden Fehler wird zweckmäßigerweise durch die Messung des Bereichs der nahezu völligen Abschattung des Ultraschallfeldes bestimmt. Auf diese Weise läßt sich die dreidimensionale Erstreckung von Fehlern ermitteln, die größer als die Schallfeldbreite sind. Hierzu wird über die Feststellung der Tiefenlage der Ränder ebenfalls die Kalibrierkurve ausgenutzt.

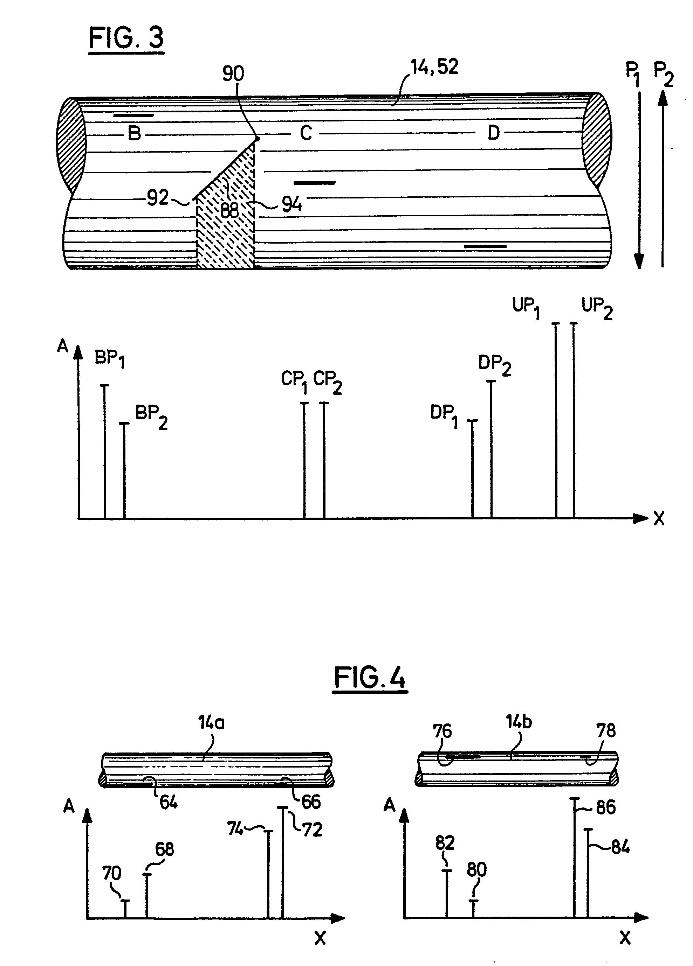

Die oben erwähnte Kurve gibt vorzugsweise das Verhältnis der in den beiden unterschiedlichen Durchschallungsrichtungen bei Testkörpern festgestellten Schalldruckamplituden in Abhängigkeit von der Fehlertiefe an. Es handelt sich also jeweils um die Mittelwerte der Schalldruckamplituden. Durch die Mittelung werden laufzeitabhängige Einflüsse, die das Meßergebnis verfälschen können, beseitigt. Durch die Prinzipdarstellung gemäß Fig. 3 soll verdeutlicht werden, wie sich die Shalldruckamplituden in Abhängigkeit von der Fehlertiefe und der Prüfrichtung ändern. Bei Prüfrichtungen $P_1$ und $P_2$ ändern sich in Abhängigkeit der Fehlerlage B, C, D die Schalldruckamplituden $BP_1$, $BP_2$, $CP_1$, $CP_2$, $DP_1$, $DP_2$. Wird kein Fehler festgestellt, so erhält man die Schalldruckamplituden $UP_1$ und $UP_2$. Der Vergleich zwischen diesen Schalldruckamplituden und denen, die bei Anwesenheit eines Fehlers C in der Mitte des Werkstücks 14, 52 festzustellen sind zeigt, daß letztere geringer sind, gleichwenn keine Unterschiede hinsichtlich Prüfrichtung $P_1$, $P_2$ festzustellen ist. Der Unterschied zwischen den jeweils gleichen Amplituden $CP_1$, $CP_2$ bzw. $UP_1$ und $UP_2$ zeigt jedoch das Vorliegen eines Fehlers in der Mitte des Werkstücks 14, 52 an.

Durch die vorstehend erwähnte Quotientenbildung werden gleich größe Fehler in Abhängigkeit von der Tiefenlage gleich bewertet.

Bei der in Fig. 2 dargestellten Ausführungsform sind zwei Sender-Empfängerpaare 40, 42 für Ultraschallwellen vorhanden. Jedes Sender-Empfängerpaar 40, 42 enthält einen gesonderten Senderprüfkopf 44 bzw. 46 und einen Empfängerprüfkopf 48 bzw. 50. Die Sender-, Empfängerprüfköpfe 44, 48 bzw. 46, 50 sind so zu beiden, einander entgegengesetzten Seiten eines zu prüfenden Werkstücks 52 angeordnet, daß die Richtungen der Ultraschallwellen einander entgegengesetzt sind. Ferner sind die Sender-, Empfängerprüfköpfe 44, 48 bzw. 46, 50 in jedem Sender-Empfängerpaar 40, 42 gleich ausgebildet. Die Sender-, Empfängerprüfköpfe 44, 48 bzw. 46, 50 sind auch auf die gleiche Weise an die Oberfläche des Werkstücks 52 angekoppelt.

Die Senderprüfköpfe 44, 46 wird jeweils mit Sendern 54, 56 verbunden. An die Senderprüfköpfe 48, 50 sind jeweis Vorverstärker 58, 60 angeschlossen. Die Vorverstärker 58, 60 sind mit ihren Ausgängen an den Hauptverstärker 24 in der Steuereinheit 26 angeschlossen. Der Multiplexer 28 ist über die Leitungen 30, 32 jeweils mit den Sendern 54, 56 und über die Leitungen 34, 36 jeweils mit den Vorverstärkern 58, 60 verbunden.

Für die Durchschallungsprüfung wird das Werkstück 52 nacheinander an der gleichen Stelle 62, die in Fig. 2 gestrichelt dargestellt ist, mit den Sender-Empfängerpaaren 40, 42 durch Ultraschallwellen beaufschlagt, die zueinander entgegengesetzte Richtungen haben. Die Sender-, Empfängerpaare, 40, 42 sind deshalb in Bezug auf die Bewegungsrichtung des Werkstücks 52 in der gleichen Prüfspur angeordnet. Es ist auch möglich, das Werkstück 52 ortsfest zu belassen, und die Sender-, Empfängerpaare während der Prüfung zu verschieben.

Die Prüfung des Werkstücks 52 an der Stelle 62 wird so durchgeführt, daß zunächst der Sender 54 über die Leitung 30 und der Vorverstärker 58 über die Leitung 34 aktiviert werden. Danach wird zum Beispiel das Werkstück 52 soweit vorschoben, daß sich das Sender-Empfängerprüfpaar gegenüber der Stelle 62 befindet. Anschließend werden der Sender 56 über die Leitung 32 und der Vorverstärker 60 über die Leitung 36 aktiviert. Die beiden Sender-, Empfängerpaare können fortlaufend in Betrieb gehalten werden, wenn zum Beispiel zwei getrennte Hauptverstärker verwendet werden, denen Speicher nachgeschaltet sind, aus denen die Meßwerte zu beliebigen Zeiten abgerufen werden können.

Die in den beiden Meßzyklen festgestellten Schalldruckamplituden werden auf die oben im Zusammenhang mit der Anordnung gemäß Fig. 1 bereits beschriebene Weise zur Tiefenbestimmung von Fehlern ausgewertet. Die Kalibrierung mit vorgegebenen Testkörpern von gleicher Form und gleichen Abmessungen wie das Werkstück 52 erfolgt mit der in Fig. 2 gezeigten Anordnung.

In Fig. 4 sind zwei Werkstücke 14a und 14b nebeneinander dargestellt. Im Werkstück 14a sind zwei Fehler 64, 66 nahe an der gemäß Fig. 4 unteren Oberfläche vorhanden. Der Fehler 64 ist größer als der Fehler 66. Die beiden Fehler 64, 66 sollen den gleichen Abstand zur Oberfläche haben und sich in Achsrichtung des Werkstücks 14a parallel zu der Oberfläche erstrecken. Es wird verausgesetzt, daß die Fehler 64 und 66 kleiner als die Schallfeldbreite sind. Derjenige Empfänger, der nahe an der Oberfläche des Werkstücks 14a angeordnet ist, an der sich in geringem Abstand der Fehler 64 befindet, stellt zum Beispiel eine Schalldruckamplitude 68 fest. Der auf der gegenüberliegenden Seite angeordnete Empfänger mißt eine Schalldruckamplitude, die in Fig. 4 mit 70 bezeichnet ist. Der Unterschied bzw. Quotient der Schalldruckamplituden 68, 70 ist ein Maß für die Tiefenlage des Fehlers 64. Aus dem Vorzeichen bzw. dem Wert größer oder kleiner als eins bei Quotienten ist die Lage der Fehler 64, 66 gegenüber der Mitte des Prüfkörpers 14a feststellbar. Bei dem relativ großen Fehler 64 ergeben sich relativ kleine Absolutwerte der Schalldruckamplituden. Die Schalldruckamplituden sind ein Maß für die Fehlergröße. Bei dem relativ kleinen Fehler 66 stellt derjenige Empfänger, der nahe an der Oberfläche angeordnet ist, die vom Fehler 66 einen geringeren Abstand als die diametral gegenüberliegende Oberfläche hat, eine Schalldruckamplitude von 72 fest, während der an der diametral gegenüberliegenden Fläche angeordnete Empfänger eine Schalldruckamplitude mißt, die in Fig. 4 mit 74 bezeichnet ist. Die Differenzen der Schalldruckamplituden 68, 70 und 72, 74 sind gleich, da die Fehler 64, 66 den gleichen Abstand von der Oberfläche haben. Die Absolutwerte sind unterschiedlich, da sich die Fehler 64, 66 hinsichtlich der Größe unterscheiden. Die Vorzeichen sind gleich, da die Fehler 64, 66 in gleicher Tiefenlage angeordnet sind.

Das Werkstück 14b hat zwei Fehler 76, 78, die hinsichtlich der Größe und des Abstands von der Oberfläche jeweils mit den Fehlern 64, 66 übereinstimmen. Die Fehler 76, 78 befinden sich jedoch im Vergleich zu den Fehlern 64, 66 nahe an der diametral gegenüberliegenden Oberfläche. Bei der Messung an demjenigen Werkstückbereich, in dem sich der relativ größere Fehler 76 befindet, ergeben sich in den beiden zueinander entgegengesetzten Durchschallungsrichtungen die Schalldruckamplituden 80, 82. Die beiden Schalldruckamplituden 68 und 80 sowie 70 und 82 sind gleich groß. Die Größe der mit den Empfängern gemessenen Schalldruckamplituden ist demnach bei den jeweiligen Fehlern 64 und 76 gerade umgekehrt. Aus den Vorzeichen der Differenz der Schalldruckamplituden 82 und 80 ergibt sich die Position des Fehlers 76 gegenüber der Mitte des Werkstücks 14b. Die Messung der Schalldruckamplituden an demjanigen Bereich, in dem sich der relativ kleinere Fehler 78 befindet, ergibt zwei Werte 84, 86. Da der Fehler 78 den gleichen Abstand von der Oberfläche hat wie der Fehler 66, ergeben sich Schalldruckamplituden, die in der Größe jeweils gleich groß wie die Schalldruckamplituden 72, 74 sind. Lediglich die der gleichen Richtung des Ultraschallstrahls zugeordneten Schalldruckamplituden 74, 86 und 72, 84 sind verschieden voneinander.

Für die Bewertung der Fehler ergeben sich demnach zwei Maßstäbe:

a) Die Differenz der Schalldruckamplituden in den beiden zueinander entgegengesetzten Schallrichtungen ermöglicht die Feststellung der Tiefenlage.

b) Die absoluten Höhen der Schalldruckamplituden, die in zwei zueinander entgegengesetzten Richtungen gemessen werden, ermöglichen die Feststellung der mittleren Größe des Fehlers.

In Fig. 3 ist ein Fehler 88 dargestellt, der größer als die Schallfeldbreite ist. An den Rändern 90 und 92 des Fehlers 88 wird jeweils auf die oben beschriebene Weise die Tiefenlage der Ränder 90 und 92 bestimmt. Gestrichelt ist in Fig. 3 ein Bereich 94 dargestellt, in dem eine besonders größe Dämpfung der Ultraschallsignale vorhanden ist. Aus der Messung der Ausdehnung des Bereichs 94 kann in Verbindung mit den Tiefenwerten beispielsweise der Ränder 90, 92 und der weiteren nicht dargestellten Randzonen der dreidimensionale Verlauf des Fehlers 88 im Werkstück 14 bzw. 52 festgestellt werden.

Die mit der Testkörpermethode erhaltenen Kurven sind vorzugsweise in digitaler Form in einem Speicher des Steuergeräts 26 enthalten. Das Steuergerät 26 weist zweckmäßigerweise einen Mikroprozessor auf, der die in zwei aufeinanderfolgenden Prüfzyklen gemessenen Schalldruckamplituden in Relation zueinander setzt und den so erhaltenen Quotienten mit der Kurve vergleicht. Mit dem Vergleich wird festgestellt, ob ein Fehler im Material vorhanden ist, und ob der Fehler in der Mitte des Materials oder außerhalb der Mitte liegt. Wenn der Fehler außerhalb der Mitte liegt, gibt die Kurve die Fehlertiefe an. Die Hälfte in der sich der Fehler befindet, ergibt sich aus der Reihenfolge der gemessenen Schalldruckamplituden.

## Patentansprüche

1. Verfahren zur zerstörungsfreien Prüfung von Werkstücken und Bauteilen mit Ultraschall, wobei die Werkstücke oder Bauteile jeweils an gleichen Stellen nacheinander nach dem Durchschallungsprinzip mit Ultraschallwellen beaufschlagt werden, die sich unter sonst gleichen Bedingungen durch ihre einander entgegengesetzten Richtungen unterscheiden, dadurch gekennzeichnet, daß die bei den unterschiedlichen Schallrichtungen empfangenen Ultraschallsignale, sofern sie verschiedene Signalamplituden aufweisen, zur Bestimmung der Fehlertiefe im Werkstück (14, 14a, 14b, 52) oder Bauteil mit vorgegebenen Werten verglichen werden, die von einem gleichen Werkstück oder Bauteil mit Fehlern vorab bekannter Tiefe gewonnen sind, während bei einer in etwa völligen Schallabsorption die Beaufschlagung mit Ultraschallwellen in einander entgegengesetzten Richtungen an benachbarten Stellen (90, 92) fortgesetzt wird, bis Ultraschallsignale empfangen werden, deren Unterschiede zur Feststellung der Tiefenlage des jeweiligen Fehlers (88) ausgewertet werden.

2. Verfahren nach Anspruch 1, dadurch gekennzeichnet, daß aus der Differenz der in den zueinander entgegengesetzten Richtungen gemessenen Schalldruckamplituden (68, 70, 72, 74, 80, 82, 84, 86) die Tiefenlage des jeweiligen Fehlers (64; 66; 76; 78) und vorzugsweise aus den Absolutwerten der Schalldruckamplituden (68, 70, 72, 74, 80, 82, 84, 86) die Fehlergröße bestimmt wird.

3. Verfahren nach Anspruch 1, dadurch gekennzeichnet, daß aus dem Quotienten der in den zueinander entgegengesetzten Richtungen gemessenen Schalldruckamplituden (68, 70; 72, 74; 80, 82; 84, 86) die Tiefenlage des jeweiligen Fehlers (64, 66; 76; 78) und vorzugsweise aus den Absolutwerten der Schalldruckamplituden die Fehlergröße bestimmt wird.

4. Verfahren nach einem der vorausgehenden Ansprüche, dadurch gekennzeichnet, daß der Bereich mit etwa völliger Schallabsorption zur Bestimmung der Fehlergröße gemessen wird.

5. Vorrichtung zur zerstörungsfreien Prüfung von Werkstücken (52) und Bauteilen mit Ultraschall, mit der die Werkstücke (52) oder Bauteile an jeweils gleichen Stellen nacheinander nach dem Durchschallungsprinzip mit Ultraschallwellen beaufschlagt werden, die sich unter sonst gleichen Bedingungen durch ihre einander entgegengesetzten Richtungen unterscheiden und die mit auf einander gegenüberliegenden Seiten des jeweiligen Werkstücks (52) oder Bauteils in gleichem Abstand zur Oberfläche und auf gleichartige Weise an die Oberfläche angekoppelten Prüfköpfen (10, 12; 44, 46, 48, 50) gesendet bzw. empfangen werden, wobei ein gemeinsamer Hauptverstärker für die empfangenen Signale vorgesehen ist, dadurch gekennzeichnet, daß zwei je auf einer Seite des Wertstücks (52) oder Bauteils angeordnete Sender-, Empfänger-Ultraschallprüfköpfe (10, 12) je mit einem Sender (16, 20) und einem Vorverstärker (18, 22) verbunden sind, daß der Sender des einen und der Vorverstärker des anderen Sender-, Empfänger-Ultraschallprüfkopfs im Wechsel mit dem Vorverstärker des einen und dem Sender des anderen Sender-, Empfänger-Ultraschallprüfkopfs mit einem Multiplexer (28) aktiviert werden oder daß zwei Sender-Empfängerpaare (40, 42) in verschiedenen Sender- und Empfängerprüfköpfen (44, 48 bzw. 46, 50) zur Erzeugung von Ultraschallwellen mit zueinander entgegengesetzten Richtungen beiderseits des Werkstücks oder Bauteils angeordnet sind, daß die Senderprüfköpfe (44, 46) jeweils mit einem Sender (54, 56) und die Empfängerprüfköpfe (48, 50) je mit einem Vorverstärker (58, 60) verbunden sind, daß der jeweils zu einem Sender-Empfängerpaar (40) gehörige Sender (54) und der Vorverstärker (58) in zeitlichem Wechsel mit dem zum anderen Sender-Empfängerpaar (42) gehörigen Sender (56) und dem Vorverstärker (60) mit dem Multiplexer (28) aktivierbar sind, der von einem zentralen Steuergerät (26) betätigbar ist, das den mit den Vorverstärkern (18, 22; 58, 60) verbundenen Hauptverstärker und einen Speicher aufweist, in dem vorab Werte gespeichert sind, die von einem Werkstück oder Bauteil von gleicher Form und Abmessungen mit Fehlern vorgegebener Fehlertiefe erhalten sind, daß das Steuergerät (26) derart ausgebildet ist, daß es die jeweils an gleichen Stellen des Wertstücks (52) oder Bauteils bei unterschiedlichen Schallrichtungen empfangenen Ultraschallsignale, sofern sie verschiedene Signalamplituden aufweisen, mit den gespeicherten Vergleichserten zur Fehlertiefenbestimmung vergleicht und daß die Vorrichtung derart ausgebildet ist, daß bei einer in etwa völligen Schallabsorption das Werkstück (52) oder Bauteil nach Messung der Ultraschallsignale weiterbewegt wird, bis die empfangenen Ultraschallsignale die für die Tiefenlagebestimmung ausreichend hohen Signalamplituden aufweisen.

## Revendications

1. Procédé de contrôle non destructif par ultrasons de pièces usinées et d'éléments de construction, ceux-ci étant sollicités chacun les uns après les autres, en des endroits identiques, selon le principe par transmission, des ondes par ultrasons qui se distinguent entre elles par leurs directions mutuellement opposées, caractérisé en ce que, pour autant qu'ils présentent des amplitudes différentes, les signaux par ultra-sons reçus selon des directions différentes de transmission sont comparés, en vue de la détermination des profondeurs des défauts dans la pièce usinée (14, 14a, 14b, 52) ou dans l'élément de construction, à des valeurs prédéterminées qui ont été acquises à l'aide d'une pièce usinée ou d'un élément de construction identique présentant des défauts de profondeur connue au préalable alors que, dans le cas d'une absorption sonore à peu près complète, la sollicitation aux ondes par ultra-sons est poursuivie en des endroits voisins (90, 92), selon des directions mutuellement opposées, jusqu'à ce que soient reçus des signaux par ultra-sons dont les différences sont exploitées en vue de la détermination de la position en profondeur du défaut respectif (88).

2. Procédé selon la revendication 1, caractérisé en ce que la position en profondeur du défaut respectif (64, 66, 76, 78) est déterminée à partir de la différence des amplitudes de pression sonore (68, 70, 72, 74, 80, 82, 84, 86) mesurées selon des directions mutuellement opposées, et que la taille du défaut est de préférence déterminée à partir des valeurs absolues des amlitudes de pression sonore (68, 70, 72, 74, 80, 82, 84, 86).

3. Procédé selon la revendication 1, caractérisé en ce que la position en profondeur du défaut respectif (64, 66, 76, 78) est déterminée à partir du quotient des amplitudes de pression sonore (68, 70, 72, 74, 80, 82, 84, 86) mesurées selon des directions mutuellement opposées, et que la taille du défaut est de préférence déterminée à partir des valeurs absolues des amplitudes de pression sonore.

4. Procédé selon l'une des revendications précédentes, caractérisé en ce que la zone présentant une absorption à peu près complète est mesurée en vue de la détermination de la taille du défaut.

5. Dispositif de contrôle non destructif de pièces usinées (52) et d'éléments de construction, par des ultra-sons à l'aide desquels les pièces usinées (52) ou les éléments de construction sont sollicités chacun, les uns après les autres, en des endroits identiques, selon le principe par transmission, par des ondes par ultra-sons qui se distinguent entre elles, toutes choses étant égales par ailleurs, par leurs directions mutuellement opposées, et les signaux étant émis ou captés à l'aide de têtes de mesure (10, 12; 44, 46, 48, 50) situées sur des faces mutuellement opposées de la pièce à usiner (52) ou de l'élément de construction respectif, à distance identique par rapport à la surface et couplées de manière identique par rapport à la surface, un amplificateur principal commun étant prévu pour les signaux reçus, caractérisé en ce que deux têtes de mesure (10, 12) à émetteur et à récepteur d'ultra-sons, disposées chacune sur une face de la pièce à usiner (52) ou de l'élément de construction, sont chacune reliées à un émetteur (16, 20) et à un préamplificateur (18, 22), l'émetteur de l'une et le préamplificateur de l'autre tête de mesure à émetteur et à récepteur d'ultra-sons sont activées en alternance avec le préamplificateur de l'une et l'émetteur de l'autre tête de mesure à émetteur et à récepteur d'ultra-sons, à l'aide d'un multiplexeur (28) ou que deux paires d'émetteur-récepteur (40, 42) situées dans des têtes de mesure à émetteur et à récepteur différentes (44, 48 ou 46, 50) sont disposées des deux côtés de la pièce à usiner ou de l'élément de construction, en vue de produire des ondes par ultra-sons présentant des directions mutuellement opposées, en ce que les têtes de mesure à émetteur (44, 46) sont chacune reliées à un émetteur (54, 56) et que les têtes de mesure à récepteur (48, 50) sont chacune reliées à un préamplificateur (58, 60), en ce que l'émetteur (54) qui appartient chaque fois à une paire à émetteur et à récepteur (40) et le préamplificateur (58) peuvent être activés en alternance temporelle avec l'émetteur (56), qui appartient à l'autre paire à émetteur et à récepteur (42) et avec le préamplificateur (60), à l'aide du multiplexeur (28) qui est actionnable depuis un appareil de commande central (26) qui est pourvu d'un amplificateur principal, relié aux préamplificateurs (18, 22; 58, 60) et d'une mémoire dans laquelle on a stocké au préalable des valeurs obtenues d'une pièce usinée ou d'un élément de construction de forme et de dimension identiques et présentant des défauts de position en profondeur prédéterminée, en ce que l'appareil de commande (26) est réalisé de façon que, pour autant qu'ils présentent des amplitudes différentes, les siganux par ultra-sons reçus chaque fois en des endroits identiques de la pièce (52) ou de l'élément de construction, dans des directions sonores différentes, sont comparés avec les valeurs de comparaison stockées en mémoire, en vue de la détermination de la profondeur des défauts, et en ce que le dispositif est réalisé de façon que, dans le cas d'une absorption sonore à peu près complète, la pièce usinée (52) ou l'élément de construction exécute un déplacement complémentaire, après mesure des signaux par ultra-sons, jusqu'à ce que les signaux par ultra-sons captés présentent les amplitudes de signaux suffisamment élevées qui sont nécessaires à la détermination de la position en profondeur.

## Claims

1. Process for the non-destructive testing of workpieces and components with ultrasound, whereby the workpieces and components are irradiated with ultrasonic waves at identical points in succession in accordance with the through-transmission principle, the said ultrasonic waves being distinguished from each other, under otherwise identical conditions, by their opposing directions, characterised in that the ultrasonic signals received from different directions, provided that they have different signal amplitudes, in order to determine the depth of the flaw in the workpiece (14, 14a, 14b, 52) or component, are compared to specified values which are obtained from an identical workpiece or component with flaws of previously known depth, whereas with near-complete sound absorption the irradiation with ultrasonic waves in opposite directions is continued at adjacent points (90, 92), until ultrasonic signals are received, whereby their differences are evaluated in order to determine the depth of the respective flaw (88).

2. Process according to claim 1, characterised in that the depth of the respective flaw (64, 66, 76, 78) is determined from the difference of the sound pressure amplitudes (68, 70, 72, 74, 80, 82, 84, 86) measured in opposite directions to each other, and the magnitude of the flaw is preferably determined from the absolute values of the sound pressure amplitudes (68, 70, 72, 74, 80, 82, 84, 86).

3. Process according to claim 1, characterised in that the depth of the respective flaw (64, 66, 76, 78) is determined from the quotients of the sound pressure amplitudes (68, 70, 72, 74, 80, 82, 84, 86) measured in opposite directions to each other, and the magnitude of the flaw is preferably determined from the absolute values of the sound pressure amplitudes.

4. Process according to one of the preceding claims, characterised in that the region with near-complete sound absorption is measured in order to determine the magnitude of the flaw.

5. Device for the non-destructive testing of workpieces (52) and components with ultrasound, whereby the workpieces (52) and components are irradiated with ultrasonic waves or identical points in succession in accordance with the through-transmission principle, the said ultrasonic waves being distinguished from each other, under otherwise identical conditions, by their opposing directions, said ultrasonic waves being transmitted or received by means of probes (10, 12, 44, 46, 48, 50) coupled in a similar manner to the respective workpiece (52) or component and at equal distances from the surface of said workpiece or component, whereby a common main amplifier is provided for the received signals, characterised in that two ultrasonic transmit/receive probes (10, 12) are each arranged on one side of the workpiece (52) or component and are each connected to a transmitter (16, 20) and a pre-amplifier (18, 22), and that the transmitter of the one and the pre-amplifier of the other transmit/receive probe are activated alternately with the pre-amplifier of the one and the transmitter of the other transmit/receive probe by means of a multiplexer (28), or that two transmitter/receiver pairs (40, 42) in different transmit/receive probes (44, 48 and 46, 50) are arranged on both sides of the workpiece or component to generate ultrasonic waves in opposing directions, that the transmitter probes (44, 46) are each connected to a transmitter (54, 56) and the receiver probes (48, 50) are each connected to a pre-amplifier (58, 60), that the transmitter (54) associated with each transmitter/receiver pair (40), and the pre-amplifier (58), are activated alternately with the transmitter (56) associated with the other transmitter/receiver pair (42), and the pre-amplifier (60), by means of the multiplexer (28) which can be operated by a central control unit (26), that the main amplifier connected to the pre-amplifiers (18, 22; 58, 60) has a memory in which values are previously stored, which are obtained from a workpiece or component of identical form and dimensions, with flaws of specified depth, that the control unit (26) is designed in such a way that it compares ultrasonic signals received from different directions at identical points of the workpiece (52) or component, provided they have different signal amplitudes, with the stored reference values for flaw depth determination, and that the device is designed so that with near-complete sound absorption, after measurement of the ultrasonic signals, the workpiece (52) or component is further displaced until the received ultrasonic signals exhibit sufficiently high signal amplitudes for flaw depth determination.

Fig.1

Fig.2

1

## FIG. 3

## FIG. 4